(19) **Europäisches Patentamt / European Patent Office / Office européen des brevets**

(11) **EP 3 465 112 B1**

(12) **FASCICULE DE BREVET EUROPEEN**

(45) Date de publication et mention de la délivrance du brevet:
**03.08.2022 Bulletin 2022/31**

(21) Numéro de dépôt: **17742790.3**

(22) Date de dépôt: **30.05.2017**

(51) Classification Internationale des Brevets (IPC):
*G01J 3/28* *(2006.01)*  *G01J 3/51* *(2006.01)*
*G01J 3/02* *(2006.01)*  *G01J 3/26* *(2006.01)*
*H04N 5/359* *(2011.01)*  *H04N 17/00* *(2006.01)*

(52) Classification Coopérative des Brevets (CPC):
**G01J 3/027; G01J 3/26; G01J 3/28; G01J 3/513; H04N 5/359; H04N 17/002;** G01J 2003/2826

(86) Numéro de dépôt international:
**PCT/FR2017/000112**

(87) Numéro de publication internationale:
**WO 2017/207881 (07.12.2017 Gazette 2017/49)**

(54) **PROCÉDÉ DE LIMITATION DE LA DIAPHONIE DANS UN CAPTEUR D'IMAGERIE**

VERFAHREN ZUR BEGRENZUNG VON NEBENSPRECHEN IN EINEM BILDSENSOR

METHOD FOR LIMITING CROSSTALK IN AN IMAGE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2016 FR 1600872**
**13.06.2016 FR 1600947**

(43) Date de publication de la demande:
**10.04.2019 Bulletin 2019/15**

(73) Titulaire: **Silios Technologies**
**13790 Peynier (FR)**

(72) Inventeurs:
• **TISSERAND, Stéphane**
**13400 Aubagne (FR)**
• **ROUX, Laurent**
**13013 Marseille (FR)**
• **HUBERT, Marc**
**13710 Fuveau (FR)**
• **SAUGET, Vincent**
**13100 Aix-en-Provence (FR)**
• **FAIOLA, Aurélien**
**13013 Marseille (FR)**

(74) Mandataire: **IP Trust**
**2, rue de Clichy**
**75009 Paris (FR)**

(56) Documents cités:
**WO-A1-2009/142641**  **JP-A- 2011 223 452**
**US-A1- 2012 274 786**  **US-A1- 2014 193 050**

**Description**

La présente invention concerne un procédé de limitation de la diaphonie dans un capteur d'imagerie.

Différentes technologies permettent d'analyser un objet avec une résolution spectrale satisfaisante lorsque l'on recherche un spectre continu.

Ces technologies sont également bien adaptées dans le cas où un nombre fini de bandes passantes relativement fines (c'est-à-dire un spectre discret par opposition à un spectre continu) est suffisant pour identifier les constituants recherchés.

Toutefois, elles considèrent l'objet à analyser comme une entité indissociable, c'est-à-dire non résolu spatialement, et elles ne sont pas aptes à identifier des variations de transmission ou de réflexion optique au sein même de l'objet.

Ainsi, le document FR 2 904 432 enseigne une structure matricielle de filtrage optique et un capteur d'images associé. Il s'agit ici de parvenir à l'obtention des différentes couleurs. En effet, à partir de trois couleurs fondamentales prélevées dans le spectre visible (rouge, vert, bleu), on peut reconstituer la majorité des couleurs.

Dans le cas présent, on utilise une matrice de filtres disposée à la surface d'une matrice de détecteurs. La matrice de filtres est ici une matrice dite de « Bayer » mais cela importe peu pour la présente invention. La matrice de détecteurs est une matrice dite APS CMOS (« Active Pixel Sensor Complementary Metal Oxide Semiconductor » en terminologie anglaise). Cette matrice est implémentée sur un substrat semiconducteur à la surface duquel sont agencés des zones photosensibles, des circuits électroniques et des connexions électriques.

Sur un pixel élémentaire, la zone photosensible ne représente qu'une partie de la surface totale, le reste de la surface étant occupée par l'électronique de commande. Il faut donc prévoir des microlentilles, une par pixel, pour focaliser la lumière incidente sur la zone photosensible du pixel. La matrice de filtres est agencée au contact du détecteur si bien que l'ensemble se présente comme un composant consistant en un empilement détecteurs-filtres-microlentilles.

En effet, il n'est pas envisageable de déposer la matrice de filtres sur les microlentilles car la topologie de ces derniers est très marquée. De plus, les microlentilles sont en résine si bien qu'il semble délicat de réaliser un filtre inorganique sur un matériau organique.

Or l'ouverture angulaire du faisceau incident sur les filtres est importante quand ces derniers sont disposés sous les microlentilles. La réponse des filtres est très liée à cet angle d'incidence. Il s'ensuit une modification de la réponse spectrale.

Pour éviter ce problème d'incidence angulaire sur les filtres on pourrait envisager de supprimer les microlentilles. Toutefois, la zone photosensible présente une surface réduite par référence à la surface totale du pixel. Le gain en sensibilité apporté par la microlentille est d'environ 50%. Il semble donc inapproprié de perdre en sensibilité en supprimant les microlentilles.

Il faut par ailleurs mentionner que le rendement de fabrication d'un tel composant est relativement faible. Le rendement global est sensiblement égal au produit des trois rendements suivants :

- fabrication du détecteur,
- fabrication de la matrice de filtres,
- fabrication du réseau de microlentilles.

Il s'ensuit qu'en multipliant les opérations de fabrication, on réduit le rendement global en conséquence.

On dispose ainsi d'un capteur d'imagerie multispectrale qui ne présente pas les limitations évoquées ci-dessus.

Ce capteur est décrit en se référant aux figures annexées qui représentent :

- la figure 1, le schéma de principe d'une cellule de filtrage à une dimension, plus particulièrement :
- la figure 1a, une vue de dessus de cette cellule, et
- la figure 1b, une vue en coupe de cette cellule ;
- les figures 2a à 2c, trois étapes d'un premier mode de réalisation d'un module de filtrage ;
- les figures 3a à 3f, six étapes d'un deuxième mode de réalisation de ce module de filtrage ;
- la figure 4, le schéma de principe d'un module de filtrage à deux dimensions ;
- la figure 5, le schéma d'un module de filtrage dont les cellules comportent chacune neuf filtres ;
- la figure 6, un schéma en coupe du capteur proposé.

Les éléments présents dans plusieurs figures sont affectés d'une seule et même référence.

On commence par décrire un module de filtrage qui comporte une pluralité de cellules de filtrage généralement identiques.

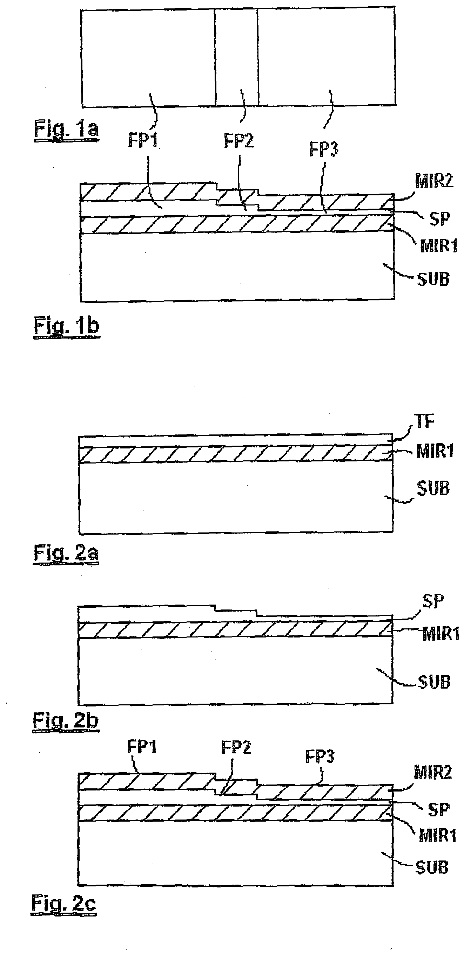

En référence aux figures 1a et 1b, une cellule de filtrage comporte trois filtres interférentiels du type Fabry-Pérot FP1, FP2, FP3 alignés successivement de sorte qu'ils forment un ruban.

Cette cellule est constituée par l'empilement sur un substrat SUB, en verre ou en silice par exemple, d'un premier miroir M1, d'une membrane d'espacement SP et d'un deuxième miroir MIR2.

La membrane d'espacement SP qui définit la longueur d'onde centrale de chaque filtre est donc constante pour un filtre donné et varie d'un filtre à l'autre. Son profil a une forme d'escalier car chaque filtre a une surface sensiblement rectangulaire.

Un premier procédé de réalisation du module de filtrage en technologie couches minces est donné à titre d'exemple.

En référence à la figure 2a, on commence par déposer sur le substrat SUB le premier miroir MIR1 puis une couche ou un ensemble de couches diélectriques TF appelé à définir la membrane d'espacement SP. Le miroir est soit métallique soit diélectrique.

En référence à la figure 2b, ce diélectrique TF est gravé :

- dans un premier temps au niveau des deuxième FP2 et troisième FP3 filtres pour définir l'épaisseur de la membrane d'espacement SP au niveau du 2$^{\text{éme}}$ filtre FP2,
- dans un deuxième temps au niveau du troisième filtre FP3 pour définir à son niveau l'épaisseur de cette membrane.

La membrane d'espacement SP au niveau du premier filtre FP1 a l'épaisseur du dépôt.

En référence à la figure 2c, le deuxième miroir MIR2 est déposé sur la membrane d'espacement SP pour finaliser les trois filtres.

La membrane d'espacement SP peut être obtenue par dépôt d'un diélectrique TF puis gravures successives comme présenté ci-dessus mais elle peut également être obtenue par plusieurs dépôts successifs de couches minces.

A titre d'exemple, on peut balayer la plage de longueurs d'onde 800 à 1 000 nm en modifiant l'épaisseur optique de la membrane d'espacement de 1,4 $\lambda_0$/2 à 2,6 $\lambda_0$/2 (pour $\lambda_0$ = 900 nm et n=1,45 tandis que e varie entre 217 nm et 403 nm).

Il convient ici de noter que l'épaisseur de la membrane d'espacement doit être suffisamment faible pour n'obtenir qu'une bande de transmission dans le domaine à sonder. En effet, plus on augmente cette épaisseur, plus le nombre de longueurs d'onde satisfaisant la condition [ne = k $\lambda$/2] augmente.

Un deuxième procédé de réalisation du module de filtrage est maintenant exposé.

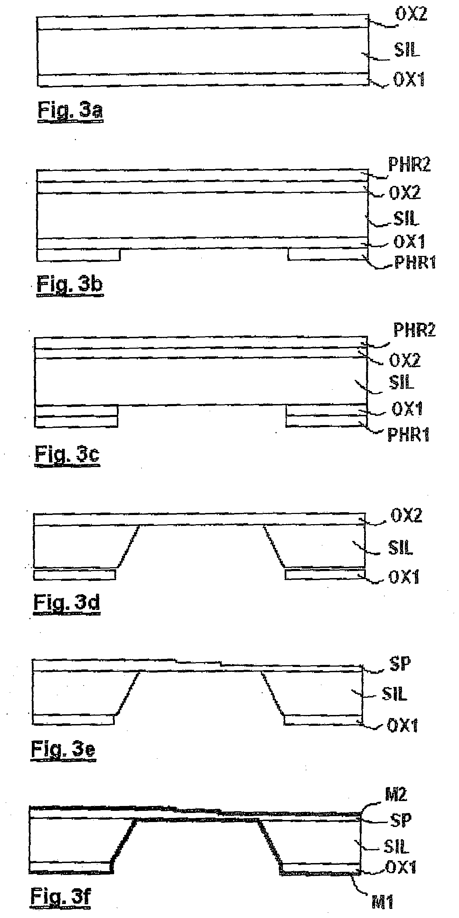

En référence à la figure 3a, on commence par pratiquer une oxydation thermique d'un substrat SIL en silicium sur sa face inférieure OX1 et sur sa face supérieure OX2.

En référence à la figure 3b, les faces inférieure OX1 et supérieure OX2 du substrat sont recouvertes respectivement d'une couche inférieure PHR1 et d'une couche supérieure PHR2 de résine photosensible. Ensuite, une ouverture rectangulaire est pratiquée dans la couche inférieure PHR1 par photolithographie.

En référence à la figure 3c, l'oxyde thermique de la face inférieure OX1 est gravé au droit de l'ouverture rectangulaire pratiquée dans la couche inférieure PHR1. Les couches inférieure PHR1 et supérieure PHR2 sont alors retirées.

En référence à la figure 3d, on réalise une gravure anisotrope du substrat SIL (orientation cristallographique 1 - 0 - 0 par exemple) au droit de l'ouverture rectangulaire, l'oxyde thermique de la face inférieure OX1 servant de masque et celui de la face supérieure OX2 servant de couche d'arrêt de gravure. Il peut s'agir soit d'une gravure humide au moyen d'une solution de potasse (KOH) ou de triméthyl ammonium hydroxyle (TMAH) soit d'une gravure sèche en plasma. Il résulte de cette opération que seule subsiste au fond de l'ouverture rectangulaire une membrane d'oxyde.

En référence à la figure 3e, cet oxyde est gravé :

- dans un premier temps au niveau des deuxième FP2 et troisième FP3 filtres pour définir l'épaisseur de la membrane d'espacement SP au niveau du 2$^{\text{ème}}$ filtre FP2,
- dans un deuxième temps au niveau du troisième filtre FP3 pour définir à son niveau l'épaisseur de cette membrane SP.

En référence à la figure 3f, les premier M1 et deuxième M2 miroirs sont déposés sur les faces inférieure OX1 et supérieure OX2 du substrat SIL.

On peut éventuellement terminer la réalisation du module de filtrage en déposant une couche de passivation (non représentée) sur l'une et/ou sur l'autre des faces inférieure OX1 et supérieure OX2.

On peut donc réaliser un ensemble de filtres alignés, ces filtres pouvant ainsi être référencés dans un espace à une dimension.

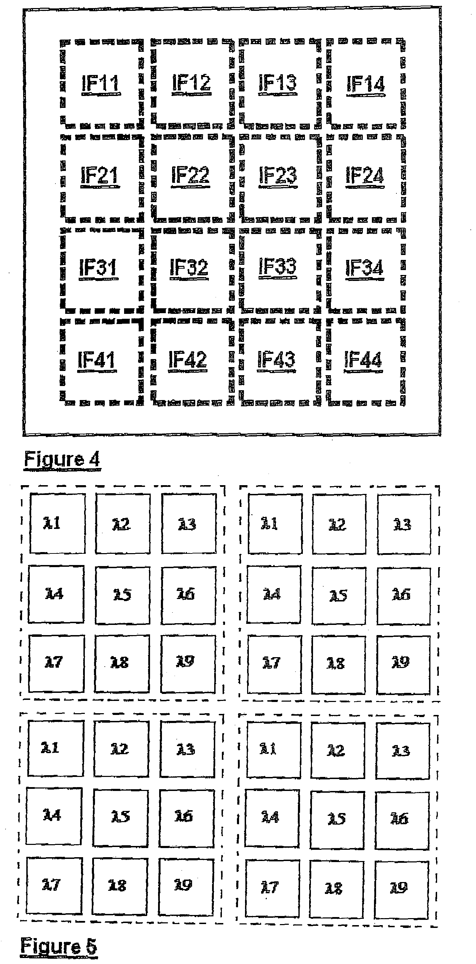

En référence à la figure 4, on peut également organiser les cellules de filtrage dans un espace à deux dimensions. Une telle organisation est souvent dénommée matricielle.

Quatre rubans horizontaux identiques comprennent chacun quatre cellules considérées maintenant comme des macropixels. Le premier ruban, celui qui apparaît en haut de la figure, correspond à la première ligne d'une matrice et comprend les macropixels IF11 à IF14. Le deuxième, le troisième, respectivement le quatrième ruban comprend les macropixels IF21 à IF24, les macropixels IF31 à IF34, respectivement les macropixels IF41 à IF44.

L'organisation est dite matricielle car le macropixel IFjk appartient au jème ruban horizontal et également à un kième ruban vertical qui comprend les macropixels IF1k, IF2k, ..., IF4k.

En référence à la figure 5, chaque macropixel comporte dorénavant 9 filtres qui définissent des pixels élémentaires. Ces macropixels se présentent chacune comme un carré dans lequel s'inscrit chaque filtre accordé sur une longueur d'onde distincte λ1, λ2, λ3, λ4, ..., λ9. L'ensemble des pixels élémentaires accordé sur une même longueur d'onde forme une sous-image.

Sur cette figure, pour des raisons de clarté, l'espacement entre les macropixels a été volontairement exagéré par rapport à l'espacement entre deux pixels élémentaires. Dans la réalité, bien entendu, ces espacements sont identiques.

Le module de filtrage est donc associé à un détecteur à même de mesurer les flux lumineux produits par les différents filtres. Ce détecteur est donc formé d'une pluralité de compartiments.

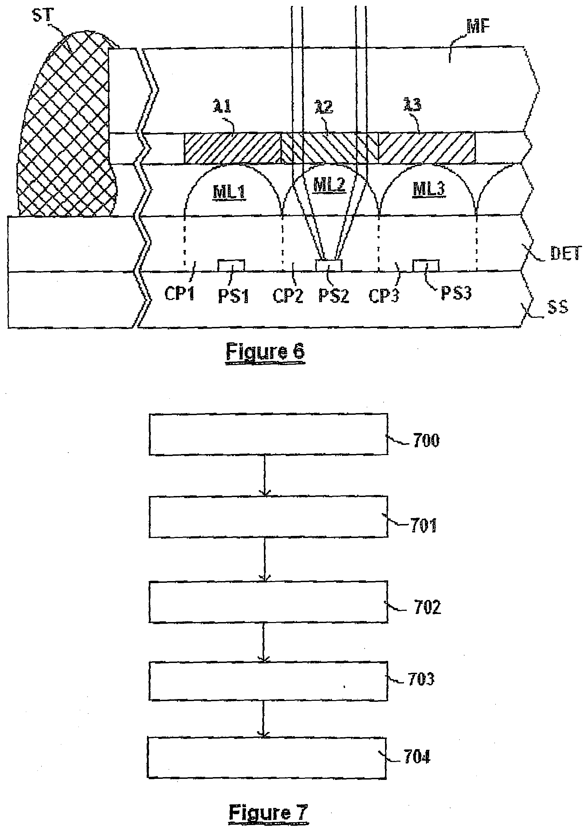

En référence à la figure 6, on reprend le module de filtrage MF qui est présenté à la figure 5.

Le détecteur DET est réalisé en technologie CMOS sur un substrat SS en silicium. Au centre de chaque compartiment CP1, CP2, CP3 de forme carrée figure une zone photosensible PS1, PS2, PS3.

Au-dessus de chaque compartiment CP1, CP2, CP3 figure une microlentille ML1, ML2, ML3 dont le diamètre est égal au côté du compartiment.

Le module de filtrage MF vient en appui sur le réseau de microlentilles ML1, ML2, ML3 de sorte que les filtres λ1, λ2, λ3 soient en regard des microlentilles ML1, ML2, ML3.

Le positionnement de ce module MF se fait au moyen de motifs d'alignement, technique connu en photolithographie par l'homme du métier qui ne sera donc pas plus développée.

Le module de filtrage MF est fixé sur le détecteur DET au moyen d'un liseré de colle ST.

Pour fixer les idées, on précisera que les pixels ont couramment une taille de l'ordre de 5 microns.

Le capteur d'imagerie multispectrale décrit ci-dessus est satisfaisant quant à la plupart de ses caractéristiques. Toutefois, il est apparu de manière surprenante que ce capteur souffrait de diaphonie entre un pixel élémentaire et ses plus proches voisins.

Ainsi le document US 2012/274786 propose un procédé de limitation de la diaphonie dans un capteur d'imagerie, ce capteur se présentant comme une matrice de macropixels définissant une image, chaque macropixel étant formé par une matrice de pixels élémentaires chacun dédié à une bande spectrale distincte, l'ensemble des pixels élémentaires dédiés à une même bande spectrale formant une sous-image, cette image étant décomposée topologiquement en au moins une parcelle, procédé comprenant les étapes suivantes :

- mesure de la réponse spectrale de chaque pixel élémentaire,
- calcul dans une parcelle de la réponse spectrale moyenne de chaque sous-image,
- ciblage pour définir dans cette parcelle la réponse idéale de chaque sous-image,
- estimation d'une série de coefficients pour minimiser la diaphonie dans cette parcelle,
- application de ces coefficients sur les macropixels pour corriger dans la parcelle les sous-images.

La présente invention a ainsi pour objet de limiter la diaphonie dans un capteur d'imagerie multispectrale, plus particulièrement dans celui faisant l'objet de la description qui précède.

Selon l'invention, un procédé de limitation de la diaphonie dans un capteur d'imagerie, ce capteur se présentant comme une matrice de macropixels définissant une image, chaque macropixel étant formé par une matrice de pixels élémentaires chacun dédié à une bande spectrale distincte, l'ensemble des pixels élémentaires dédiés à une même bande spectrale formant une sous-image, cette image étant décomposée topologiquement en au moins une parcelle, procédé comprenant les étapes suivantes :

- mesure de la réponse spectrale de chaque pixel élémentaire,
- calcul dans une parcelle de la réponse spectrale moyenne de chaque sous-image,
- ciblage pour définir dans cette parcelle la réponse idéale de chaque sous-image,
- estimation d'une série de coefficients de diaphonie pour minimiser la diaphonie dans cette parcelle,
- application de ces coefficients sur les macropixels pour corriger dans la parcelle les sous-images et produire une image corrigée de la diaphonie,

procédé remarquable en ce que on utilise :

- un détecteur (DET) photosensible formé en technologie CMOS sur un premier substrat (SS) en silicium et comprenant une matrice de pixels avec des compartiments (CP1, CP2, CP3) comprenant chacun une zone photosensible (PS1, PS2, PS3) en son centre,

- un réseau de microlentilles (ML1, ML2, ML3) de focalisation de lumière incidente sur les zones photosensibles des pixels, avec une de ces microlentilles au-dessus de chaque compartiment du détecteur, de diamètre égal au côté du compartiment, et

- un module de filtrage (MF) formé de filtres (FP1, FP2, FP3) interférentiels de type Fabry-Pérot, la longueur d'onde centrale de chaque filtre étant constante pour un filtre donné et variant d'un filtre à l'autre, ledit module de filtrage étant réalisé sur un deuxième substrat (SUB, SIL) qui est rapporté en appui sur ledit réseau de microlentilles de sorte que les filtres soient en regard des microlentilles, et ledit module de filtrage (MF) étant collé sur son pourtour audit détecteur (DET) au moyen d'un liseré de colle (ST), et en ce dans l'étape de ciblage (702) pour déterminer la réponse spectrale idéale de chaque sous-image, on choisit pour chacune d'entre elles une fonction gaussienne sur laquelle on spécifie la longueur d'onde centrale et la largeur à mi-hauteur.

On réduit ainsi sensiblement la diaphonie dans le capteur d'imagerie.

Suivant un premier agencement, l'image comportant plusieurs parcelles, ces parcelles coïncident avec les macropixels.

Suivant un deuxième agencement, l'image comportant plusieurs parcelles, ces parcelles comprennent chacune une pluralité de macropixels contigus.

Suivant un troisième agencement, l'image comportant une seule parcelle, cette parcelle coïncide avec l'image.

Suivant un mode de réalisation privilégié, l'étape d'estimation comprend une phase d'optimisation pour produire la série de coefficients de sorte que l'écart soit minimisé entre les réponses des sous-images rectifiées par ces coefficients et les réponses idéales de ces sous-images.

De préférence, la phase d'optimisation fait appel à la méthode du gradient réduit généralisé.

Selon une première option, chaque pixel élémentaire est traité par référence aux autres pixels élémentaires du même macropixel.

Cette première option a le mérite de la simplicité.

Selon une deuxième option, chaque pixel élémentaire est traité par référence aux autres pixels élémentaires qui sont ses plus proches voisins.

Cette deuxième option présente l'avantage d'une plus grande précision.

La présente invention apparaîtra maintenant avec plus de détails dans le cadre de la description qui suit d'exemples de réalisation donnés à titre illustratif en se référant aux figures suivantes annexées qui représentent :

- la figure 7, un diagramme du procédé objet de l'invention, et

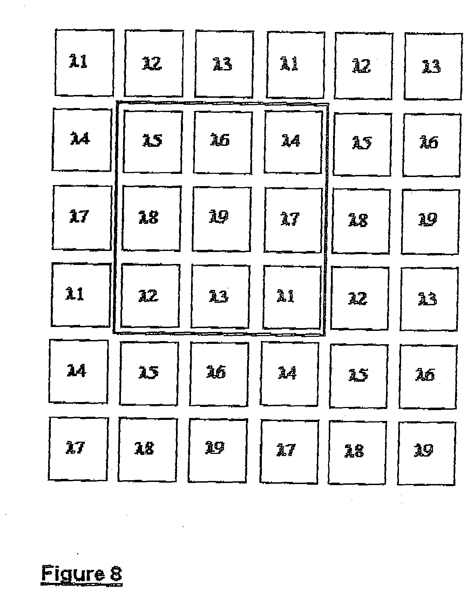

- la figure 8, un schéma montrant les plus proches voisins d'un pixel élémentaire déterminé.

L'image est donc, par hypothèse, formée par l'ensemble des macropixels du capteur d'imagerie.

L'image peut alors être subdivisée topologiquement en parcelles.

Une parcelle dont l'unité topologique est le macropixel peut donc comporter de une unité à la totalité des macropixels, cas limite où la parcelle unique se confond avec l'image.

C'est ce cas limite particulièrement intéressant qui est maintenant étudié.

On reprend la configuration matricielle décrite en référence à la figure 5, à savoir un macropixel formé de 9 pixels élémentaires.

En référence à la figure 7, la première étape du procédé selon l'invention est une étape de caractérisation 700 de chaque pixel élémentaire. On utilise pour ce faire un monochromateur qui, à titre d'exemple, couvre la gamme 400 nm - 1000 nm avec un pas de 2 nm. On obtient ainsi la réponse spectrale de tous les pixels élémentaires.

Vient ensuite une étape de moyennage 701 pour calculer la réponse spectrale moyenne de chaque sous-image en considérant les pixels élémentaires pertinents. A titre d'exemple, parmi les 9 sous-images, 8 sont accordées sur une bande spectrale distincte alors que la dernière sous-image est panchromatique. On dispose ainsi d'une référence.

L'étape suivante est une étape de ciblage 702 pour déterminer la réponse spectrale idéale de chaque sous-image. Selon l'invention, on choisit pour chacune d'entre elles une fonction gaussienne sur laquelle on spécifie la longueur d'onde centrale et la largeur à mi-hauteur. La sous-image panchromatique n'est pas corrigée.

L'étape suivante est une étape d'estimation 703 pour obtenir un tenseur de coefficients 9X9 qui, appliqué aux réponses spectrales moyennes, doit s'approcher au mieux des réponses idéales. Dans le cas présent, on retient pour cette estimation la méthode dite du gradient réduit généralisé. Mais l'homme du métier connaît de nombreuses autres méthodes qui peuvent convenir, notamment :

- méthode de Monte-Carlo,
- méthode du simplexe,
- méthode des moindres carrés,

- méthode de Nelder-Mead,
- méthode de Newton-Raphson,
- méthode de quasi-Newton,
- méthode des moindres carrés non linéaires,
- méthode de Levenberg-Marquart,
- méthode des algorithmes génétiques.

Finalement, dans une étape de correction 704, le tenseur est appliqué à l'image brute pour obtenir l'image corrigée de la diaphonie.

On détaille maintenant l'étape d'estimation en adoptant les notations suivantes :

$Fr(\lambda)$ : flux lumineux
$QE_i(\lambda)$ : efficacité quantique d'un pixel élémentaire pourvu d'un filtre $\lambda i$
$QEr_i(\lambda)$ : efficacité quantique d'un pixel élémentaire virtuel après traitement de la diaphonie,
$P_i$ : réponse d'un pixel élémentaire affecté du filtre $\lambda i$
$Pr_i$ : réponse d'un pixel élémentaire virtuel après traitement,
$CC_{ij}$ : coefficients de diaphonie du tenseur.

On fait les hypothèses suivantes :

- le flux lumineux est homogène sur un macropixel,
- le bruit est négligeable,
- la réponse des pixels élémentaires est linéaire (pas de saturation ni de correction « antiblooming », gamma, etc.),
- la réponse des filtres est linéaire et dépend uniquement de la longueur d'onde.

On définit alors :

$$QEr_i(\lambda) = \sum_j CC_{ij} \times QE_j(\lambda) \qquad [1]$$

La réponse d'un pixel élémentaire est la suivante :

$$P_i = \int_\lambda Fr(\lambda) \times QE_i(\lambda)\, d\lambda \qquad [2]$$

La réponse d'un pixel virtuel est la suivante :

$$Pr_i = \int_\lambda Fr(\lambda) \times QEr_i(\lambda)\, d\lambda \qquad [3]$$

En reportant l'équation [1] dans l'équation [3] :

$$Pr_i = \int_\lambda Fr(\lambda) \times \left(\sum_j CC_{ij} \times QE_j(\lambda)\right) d\lambda \qquad [4]$$

Les coefficients $CC_{ij}$ sont indépendants de $\lambda$, donc :

$$Pr_i = \sum_j \left( CC_{ij} \int_\lambda Fr(\lambda) \times QE_j(\lambda)\, d\lambda \right) \qquad [5]$$

En reportant l'équation [2] dans l'équation [5] :

$$Pr_i = \sum_j CC_{ij} \times P_j$$

On obtient ainsi la valeur des pixels élémentaires corrigés $Pr_i$ en fonction des valeurs des pixels élémentaires bruts $P_j$.

En procédant comme ci-dessus, on corrige un pixel élémentaire en fonction de tous les pixels élémentaires du même macropixel. Cette solution a le mérite de la simplicité et elle repose sur le fait qu'il y a peu de variation de luminosité entre deux macropixels voisins.

En référence à la figure 8, on peut améliorer la qualité de la correction en considérant, pour corriger un pixel élémentaire, non plus les pixels élémentaires du même macropixel, mais plutôt les pixels élémentaires qui sont les plus proches voisins du pixel à corriger. Cette méthode est à privilégier plus particulièrement lorsqu'on applique également un traitement spatial de démosaïquage bien connu de l'homme du métier.

A titre d'exemple, pour corriger le pixel élémentaire λ9 du macropixel qui figure en haut à gauche, on considère les pixels élémentaires suivants :

- λ5, λ6, λ8 du macropixel en haut à gauche,
- λ4, λ7 du macropixel en haut à droite,
- λ1 du macropixel en bas à droite,
- λ2, λ3 du macropixel en bas à gauche.

La méthode de correction est ici analogue à celle exposé plus haut. Elle ne sera donc pas plus détaillée car elle est à la portée de l'homme du métier.

On vient de présenter un agencement selon lequel il y a une seule parcelle, l'image étant traitée de manière globale. Le principal avantage de cet agencement réside dans le fait qu'il y a un seul tenseur à calculer. Mais cet agencement suppose que le capteur soit sensiblement homogène sur toute sa surface. Ce n'est pas toujours le cas.

Ainsi, suivant un autre agencement, l'image est décomposée en plusieurs parcelles qui présentent chacune une homogénéité meilleure que celle de l'image. A titre d'exemple, on peut choisir deux parcelles, l'une formant le centre de l'image et l'autre son pourtour, de sorte que la réunion des deux parcelles coïncide avec l'image.

Le procédé de l'invention est identique à celui décrit plus haut si ce n'est que le traitement appliqué auparavant à la totalité de l'image est maintenant appliqué successivement à chaque parcelle.

En reprenant la figure 7, la première étape du procédé selon l'invention est encore une étape de caractérisation 700 de chaque pixel élémentaire.

Vient ensuite l'étape de moyennage 701 pour calculer la réponse spectrale moyenne dans une parcelle de chaque sous-image en considérant les pixels élémentaires pertinents.

L'étape suivante est l'étape de ciblage 702 pour déterminer la réponse spectrale idéale de chaque sous-image dans la parcelle considérée.

L'étape suivante est une étape d'estimation 703 pour obtenir un tenseur de coefficients 9X9 qui, appliqué aux réponses spectrales moyennes dans la parcelle considérée, doit s'approcher au mieux des réponses idéales. Dans le cas présent, on retient pour cette estimation la méthode dite du gradient réduit généralisé.

Finalement, dans une étape de correction 704, le tenseur est appliqué à la parcelle brute pour obtenir la parcelle corrigée de la diaphonie.

La réunion des parcelles corrigées donne l'image corrigée.

Il suffit ici de deux tenseurs pour obtenir une meilleure précision.

Naturellement, on peut augmenter le nombre de parcelles pour améliorer la précision mais c'est au détriment du temps de calcul.

La précision maximale est obtenue lorsqu'il y a autant de parcelles que de macropixels.

Dans ce cas l'étape de moyennage 701 est inexistante. On remarque en effet que la moyenne d'une valeur est égale à cette valeur.

Le procédé de l'invention est identique à celui décrit plus haut si ce n'est que le traitement appliqué auparavant à la totalité de l'image ou bien à chaque parcelle est maintenant appliqué à chaque pixel élémentaire.

En reprenant la figure 7, la première étape du procédé selon l'invention est encore une étape de caractérisation 700 de chaque pixel élémentaire.

L'étape de moyennage 701 est omise car il s'agit de faire la moyenne d'une valeur unique.

L'étape suivante est l'étape de ciblage 702 pour déterminer la réponse spectrale idéale de chaque pixel élémentaire dans le macropixel considéré.

L'étape suivante est une étape d'estimation 703 pour obtenir un tenseur de coefficients 9X9 qui, appliqué aux pixels élémentaires du macropixel considéré, doit s'approcher au mieux des réponses idéales. Dans le cas présent, on retient pour cette estimation la méthode dite du gradient réduit généralisé.

Finalement, dans une étape de correction 704, le tenseur est appliqué au macropixel brut pour obtenir le macropixel corrigé de la diaphonie.

L'image corrigée est alors obtenue en recomposant l'ensemble des macropixels corrigés.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention. En particulier, tout moyen ou toute étape décrit peut être remplacé par un moyen ou une étape équivalent sans sortir du cadre de la présente invention.

## Revendications

1. Procédé de limitation de la diaphonie dans un capteur d'imagerie, ce capteur (DET-MF) se présentant comme une matrice de macropixels (IF11, IF12, ..., IF44) définissant une image, chaque macropixel étant formé par une matrice de pixels élémentaires ($\lambda$1, $\lambda$2, $\lambda$3, ..., $\lambda$9) chacun dédié à une bande spectrale distincte, l'ensemble des pixels élémentaires dédiés à une même bande spectrale formant une sous-image, ladite image étant décomposée topologiquement en au moins une parcelle, procédé comprenant les étapes suivantes :

   - mesure (700) de la réponse spectrale de chaque pixel élémentaire ($\lambda$1, $\lambda$2, $\lambda$3, ..., $\lambda$9),
   - calcul (701) dans une parcelle de la réponse spectrale moyenne de chaque sous-image,
   - ciblage (702) pour définir dans ladite parcelle la réponse idéale de chaque sous-image,
   - estimation (703) d'une série de coefficients de diaphonie pour minimiser la diaphonie dans ladite parcelle,
   - application (704) desdits coefficients sur lesdits macropixels pour corriger dans ladite parcelle lesdites sous-images et produire une image corrigée de la diaphonie,

   procédé **caractérisé en ce que** on utilise :

   - un détecteur (DET) photosensible formé en technologie CMOS sur un premier substrat (SS) en silicium et comprenant une matrice de pixels avec des compartiments (CP1, CP2, CP3) comprenant chacun une zone photosensible (PS1, PS2, PS3) en son centre,
   - un réseau de microlentilles (ML1, ML2, ML3) de focalisation de lumière incidente sur les zones photosensibles des pixels, avec une de ces microlentilles au-dessus de chaque compartiment du détecteur, de diamètre égal au côté du compartiment, et
   - un module de filtrage (MF) formé de filtres (FP1, FP2, FP3) interférentiels de type Fabry-Pérot, la longueur d'onde centrale de chaque filtre étant constante pour un filtre donné et variant d'un filtre à l'autre, ledit module de filtrage étant réalisé sur un deuxième substrat (SUB, SIL) qui est rapporté en appui sur ledit réseau de microlentilles de sorte que les filtres soient en regard des microlentilles, et ledit module de filtrage (MF) étant collé sur son pourtour audit détecteur (DET) au moyen d'un liseré de colle (ST), et

   **en ce que**, dans l'étape de ciblage (702) pour déterminer la réponse spectrale idéale de chaque sous-image, on choisit pour chacune d'entre elles une fonction gaussienne sur laquelle on spécifie la longueur d'onde centrale et la largeur à mi-hauteur.

2. Procédé selon la revendication 1 **caractérisé en ce que**, comportant plusieurs parcelles, lesdites parcelles comprennent chacune une pluralité de macropixels (IF11, IF12, ..., IF44) contigus.

3. Procédé selon la revendication 1 **caractérisé en ce que**, comportant une seule parcelle, cette parcelle coïncide avec ladite image.

4. Procédé selon l'une quelconque des revendications précédentes, **caractérisé en ce que** ladite étape d'estimation (703) comprend une phase d'optimisation pour produire ladite série de coefficients de sorte que l'écart soit minimisé entre les réponses des sous-images rectifiées par ces coefficients et les réponses idéales de ces sous-images.

5. Procédé selon la revendication 4, **caractérisé en ce que** ladite phase d'optimisation fait appel à la méthode du gradient réduit généralisé.

6. Procédé selon l'une quelconque des revendications précédentes, **caractérisé en ce que** chaque pixel élémentaire ($\lambda$1, $\lambda$2, $\lambda$3, ..., $\lambda$9) est traité en appliquant lesdits coefficients de diaphonie aux autres pixels élémentaires du même macropixel.

7. Procédé selon l'une quelconque des revendications 1 à 5, **caractérisé en ce que** chaque pixel élémentaire ($\lambda$1, $\lambda$2, $\lambda$3 $\lambda$9) est traité en appliquant lesdits coefficients de diaphonie aux autres pixels élémentaires qui sont ses plus proches voisins.

**Patentansprüche**

1. Verfahren zum Begrenzen des Übersprechens in einem bildgebenden Sensor, wobei dieser Sensor (DET-MF) als eine Matrix von Makropixeln (IF11, IF12, IF44) dargestellt ist, die ein Bild definieren, wobei jedes Makropixel durch eine Matrix von elementaren Pixeln ($\lambda$1, $\lambda$2, $\lambda$3,..., $\lambda$9) ausgebildet ist, die jeweils einem unterschiedlichen Spektralband gewidmet sind, wobei die Anordnung von Elementarpixeln, die für ein selbes Spektralband vorgesehen sind, ein Unterbild ausbilden, wobei das Bild in mindestens ein Patch topologisch zerlegt wird, das Verfahren umfassend die folgenden Schritte:

   - Messen (700) der Spektralempfindlichkeit jedes elementaren Pixels ($\lambda$1, $\lambda$2, $\lambda$3,..., $\lambda$9),
   - Berechnen (701) in einem Patch der mittleren Spektralempfindlichkeit jedes Unterbilds,
   - Ausrichten (702) zum Definieren in dem Patch der idealen Empfindlichkeit jedes Unterbilds,
   - Schätzen (703) einer Reihe von Übersprechkoeffizienten zum Minimieren des Übersprechens in dem Patch,
   - Anwenden (704) der Koeffizienten auf die Makropixel zum Korrigieren in dem Patch der Unterbilder und Erzeugen eines Bildes, dessen Übersprechen korrigiert ist,

   Verfahren, **dadurch gekennzeichnet, dass** man verwendet:

   - einen lichtempfindlichen Detektor (DET), der mit CMOS-Technologie auf einem ersten Siliziumsubstrat (SS) ausgebildet ist, und umfassend eine Pixelmatrix mit Kammern (CP1, CP2, CP3), jeweils umfassend einen lichtempfindlichen Bereich (PS1, PS2, PS3) in ihrem Zentrum,
   - eine Anordnung von Mikrolinsen (ML1, ML2, ML3) zum Fokussieren von auf die lichtempfindlichen Bereiche der Pixel einfallendem Licht, mit einer dieser Mikrolinsen über jeder Kammer des Detektors, mit einem Durchmesser, der gleich der Seite der Kammer ist, und
   - ein Filtermodul (MF), das aus Interferenzfiltern (FP1, FP2, FP3) einer Fabry-Perot-Art ausgebildet ist, wobei die zentrale Wellenlänge jedes Filters für einen gegebenen Filter konstant ist und von einem Filter zu dem anderen variiert, wobei das Filtermodul auf einem zweiten Substrat (SUB, SIL) ausgeführt ist, das an der Anordnung von Mikrolinsen anliegend angebracht ist, so dass die Filter den Mikrolinsen zugewandt sind, und wobei das Filtermodul (MF) an seinem Umfang mittels eines Klebebands (ST) mit dem Detektor (DET) verklebt ist, und,

   dass in dem Ausrichtungsschritt (702) zum Bestimmen der idealen Spektralempfindlichkeit jedes Unterbilds für jedes von ihnen eine Gaußsche Funktion ausgewählt wird, auf der die zentrale Wellenlänge und die Breite auf halber Höhe festgelegt werden.

2. Verfahren nach Anspruch 1, **dadurch gekennzeichnet, dass**, mehrere Patches aufweisend, die Patches jeweils eine Vielzahl von aneinandergrenzenden Makropixeln (IF11, IF12,..., IF44) umfassen.

3. Verfahren nach Anspruch 1, **dadurch gekennzeichnet, dass**, ein einzelnes Patch aufweisend, dieses Patch mit dem Bild übereinstimmt.

4. Verfahren nach einem der vorstehenden Ansprüche, **dadurch gekennzeichnet, dass** der Schätzschritt (703) eine Optimierungsphase zum Erzeugen der Reihe von Koeffizienten umfasst, so dass die Abweichung zwischen den Empfindlichkeiten der durch diese Koeffizienten berichtigten Unterbilder und den idealen Empfindlichkeiten dieser Unterbilder minimiert wird.

5. Verfahren nach Anspruch 4, **dadurch gekennzeichnet, dass** die Optimierungsphase die Methode des generalisierten reduzierten Gradienten hinzuzieht.

6. Verfahren nach einem der vorstehenden Ansprüche, **dadurch gekennzeichnet, dass** jedes elementare Pixel ($\lambda$1, $\lambda$2, $\lambda$3,..., $\lambda$9) unter Anwendung der Übersprechkoeffizienten auf die anderen elementaren Pixel desselben Makropixels verarbeitet wird.

7. Verfahren nach einem der Ansprüche 1 bis 5, **dadurch gekennzeichnet, dass** jedes elementare Pixel ($\lambda$1, $\lambda$2, $\lambda$3 $\lambda$9) unter Anwendung der Übersprechkoeffizienten auf die anderen elementaren Pixel verarbeitet wird, die ihre nächsten Nachbarn sind.

**Claims**

1. Method for limiting crosstalk in an imaging sensor, this sensor (DET-MF) being provided as a matrix of macropixels (IF11, IF12, ..., IF44) defining an image, each macropixel being formed by a matrix of elementary pixels ($\lambda$1, $\lambda$2, $\lambda$3, ..., $\lambda$9) each dedicated to a distinct spectral band, the set of elementary pixels dedicated to the same spectral band forming a sub-image, said image being broken down topologically into at least one fragment, the method comprising the following steps:

   - measuring (700) the spectral response of each elementary pixel ($\lambda$1, $\lambda$2, $\lambda$3, ..., $\lambda$9),
   - calculating (701), in a fragment, the average spectral response of each sub-image,
   - targeting (702) in order to define in said fragment the ideal response of each sub-image,
   - estimating (703) a series of crosstalk coefficients in order to minimize crosstalk in said fragment,
   - applying (704) said coefficients to said macropixels in order to correct said sub-images in said fragment and produce a crosstalk-corrected image,

   the method being **characterized in that** the following is used:

   - a photosensitive detector (DET) formed in CMOS technology on a first silicon substrate (SS) and comprising a matrix of pixels with compartments (CP1, CP2, CP3) which each comprise a photosensitive region (PS1, PS2, PS3) at the center thereof,
   - an array of microlenses (ML1, ML2, ML3) for focusing incident light on the photosensitive regions of the pixels, with one of these microlenses above each compartment of the detector, of a diameter equal to the side of the compartment, and
   - a filtering module (MF) formed of Fabry-Pérot interference filters (FP1, FP2, FP3), the central wavelength of each filter being constant for a given filter and varying from one filter to another, said filtering module being produced on a second substrate (SUB, SIL) which is mounted so as to rest on said array of microlenses such that the filters face the microlenses, and said filtering module (MF) being glued on its periphery to said detector (DET) by means of a strip of glue (ST), and

   **in that**, in the targeting step (702) for determining the ideal spectral response of each sub-image, a Gaussian function is selected for each of them, on which the central wavelength and the full width at half maximum are specified.

2. Method according to claim 1, **characterized in that**, comprising a plurality of fragments, said fragments each comprise a plurality of contiguous macropixels (IF11, IF12, ..., IF44).

3. Method according to claim 1, **characterized in that**, comprising a single fragment, this fragment coincides with said image.

4. Method according to any of the preceding claims, **characterized in that** said estimation step (703) comprises an optimization phase for producing said series of coefficients so that the deviation between the responses of the sub-images rectified by these coefficients and the ideal responses of these sub-images is minimized.

5. Method according to claim 4, **characterized in that** said optimization phase makes use of the generalized reduced gradient method.

6. Method according to any of the preceding claims, **characterized in that** each elementary pixel ($\lambda$1, $\lambda$2, $\lambda$3, ..., $\lambda$9) is processed by applying said crosstalk coefficients to the other elementary pixels of the same macropixel.

7. Method according to any of claims 1 to 5, **characterized in that** each elementary pixel ($\lambda$1, $\lambda$2, A3 $\lambda$9) is processed by applying said crosstalk coefficients to the other elementary pixels which are closest thereto.

EP 3 465 112 B1

Fig. 1a

FP1 FP2 FP3

MIR2
SP
MIR1
SUB

Fig. 1b

TF
MIR1
SUB

Fig. 2a

SP
MIR1
SUB

Fig. 2b

FP1 FP2 FP3

MIR2
SP
MIR1
SUB

Fig. 2c

11

OX2

SIL

OX1

**Fig. 3a**

PHR2

OX2

SIL

OX1

PHR1

**Fig. 3b**

PHR2

OX2

SIL

OX1

PHR1

**Fig. 3c**

OX2

SIL

OX1

**Fig. 3d**

SP

SIL

OX1

**Fig. 3e**

M2

SP

SIL

OX1

M1

**Fig. 3f**

Figure 4

Figure 5

**Figure 6**

**Figure 7**

**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2904432

- US 2012274786 A